# EUROPEAN PATENT APPLICATION

(11) **EP 1 331 755 A2**
(43) Date of publication of application: **30.07.2003**
(21) Application number: 02026614.4
(22) Date of filing: 29.11.2002
(51) Int. Cl.: H04L 12/18

(54) **Method and device for reliable Internet Group Management Protocol messages**

(30) Priority: 29.01.2002 US 59697
(71) Applicant: ALCATEL, 75008 Paris (FR)
(72) Inventor: Keller-Tuberg, Stefan, Kareela, NSW 2232 (AU)
(74) Representative: Dreiss, Fuhlendorf, Steimle & Becker

(57) **Abstract**

One embodiment of the disclosures made herein is a method for facilitating a multicast group switch via a single Internet Group Management Protocol message. In accordance with such method, an operation for receiving an Internet Group Management Protocol (IGMP) Membership Report message designating a request for altering a present membership status with respect to designated multicast information. The IGMP message is transmitted from a requesting system. An operation is performed for determining a membership action associated with the IGMP Membership Report message. In response to determining the membership action, an operation is performed for preparing a membership acknowledge message. The membership acknowledgment message designates a resulting membership status associated with the request for altering the present membership status. An operation is then performed for transmitting the membership acknowledge message for reception by the requesting system.

## Description

### FIELD OF THE DISCLOSURE

The disclosures made herein relate generally to communication protocols and more particularly to facilitating improved reliability of Internet Group Management Protocol through the use of acknowledge messages.

### BACKGROUND

The Internet Group Management Protocol (IGMP) is described in Request For Comments document No. 1112 (hereinafter referred to as RFC-1112) and in Request For Comments document No. 2236 (hereinafter referred to as RFC-2236). Through the use of various IGMP messages, a requesting system is able to facilitate joining and leaving one or more multicast groups. Thus, the requesting system may selectively receive one or more streams of multicast information.

With newly emerging IGMP-based services, such as IGMP controlled video distribution, there is an expectation that such emerging services will be as reliable using IGMP controlled multicast techniques as they would be via existing solutions. Examples of such existing solutions include broadcast television services, cable television services and satellite television services. However, conventional implementations of IGMP do not include provisions for notifying a requesting system that a request to join or leave a particular multicast group cannot be fulfilled. Furthermore, there are no provisions for notifying a requesting system of the error or cause that precludes the request of the requesting system from being implemented.

For example, there are no provisions for notifying a requesting system when a particular IGMP request is lost or denied, other than by waiting to see if requested multicast traffic begins to arrive or if multicast traffic being received stops arriving. If such requested multicast traffic does begin or stop upon request by the requesting system, there are no means by which the requesting system can determine whether its request has not been implemented. In this respect, IGMP is an unreliable and non-user friendly protocol.
Therefore, the use of acknowledge messages for facilitating improved reliability of Internet Group Management Protocol is useful.

### BRIEF DESCRIPTION OF THE DRAWINGS

FIG. 1 is a flow chart view depicting a method for initiating membership of a requesting system in a multicast group, wherein the method is in accordance with an embodiment of the disclosures made herein.
FIG. 2 is a flow chart view depicting a method for initiating removal of the requesting system depicted in FIG. 1 from the multicast group, wherein the method is in accordance with an embodiment of the disclosures made herein.
FIG. 3 is a diagrammatic view depicting an embodiment of an Internet Group Management Protocol (IGMP) acknowledge message in accordance with an embodiment of the disclosures made herein.

### DETAILED DESCRIPTION OF THE FIGURES

The disclosures made herein relate to various aspects of acknowledging a request to change multicast group membership status using the Internet Group Management Protocol (IGMP). Under IGMP, requests by a requesting system to change its group membership status are made using variants of IGMP Membership Report and IGMP Leave Group messages as defined in RFCs 1112 and 2236. An operation for acknowledging a request for altering the multicast group membership status is performed in response to receiving a request for altering a present membership status of the requesting system with respect to designated multicast information. For example, in response receiving a request for membership in a particular multicast group, an acknowledge message is prepared and transmitted after determining an ability or an inability to implement membership of the requesting system in the particular multicast group. Similarly, in response to a request for leaving the particular multicast group, an acknowledge message is prepared and transmitted after determining an ability or inability to implement removal of the requesting system from the particular multicast group.

An affirmative acknowledge message designates an ability to implement a request for altering a present membership status. A negative acknowledge message designates an inability to implement a request for altering a present membership status. In the case of a negative acknowledge message, the negative acknowledge message may include a cause corresponding to an inability to implement the request for altering a present membership status.

Receipt of an acknowledge message by a requesting system provides the service subscriber with positive verification of a resulting membership status in response to submitting a request for altering a present membership status. Conventional implementations of IGMP do not include provisions for notifying a requesting system that a request to join or leave a particular multicast group cannot be fulfilled. Accordingly, acknowledge messages in accordance with embodiments of the disclosures made herein are beneficial for newly emerging IGMP-based services (e.g. IGMP-controlled video distribution) as it provides enhances reliability and user-friendliness.

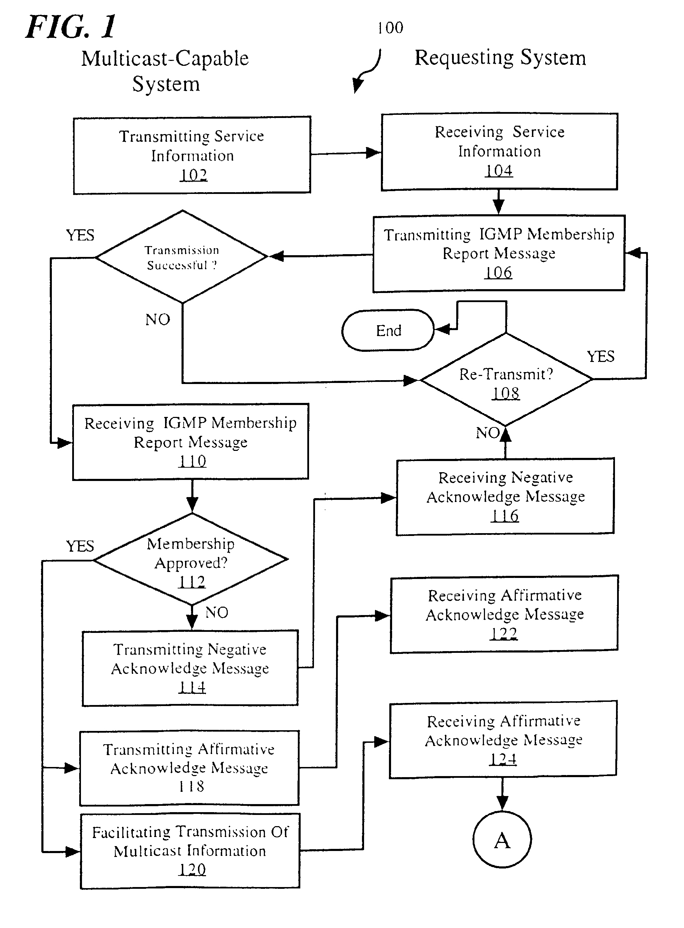

Turning now to the figures, a method 100 for initiating membership of a requesting system in a multicast group in accordance with an embodiment of the disclosures made herein is depicted in FIG. 1. Examples of requesting systems include information subscriber interface apparatus (e.g. a set-top box), a network element, and other devices, apparatuses and systems capable of transmitting a request for altering a multicast group membership status. In at least one embodiment of the disclosures made herein, a subscriber interface apparatus comprises the requesting system requiring membership to a multicast group. It is contemplated herein that the requesting system may enable transmission of membership requests and reception or download of multicast information (e.g. multicast content files). It is also contemplated herein that the requesting system may comprise a first device capable of affecting membership status (e.g. a network element) and a second device capable of interpreting the multicast information (e.g. an MPEG decoder/display, an MP3 decoder/playback system, a storage device or any other system that could process/use information which is multicast in nature).

The method 100 begins with a multicast-capable system performing an operation 102 for transmitting service information for reception by a requesting system. Examples of a multicast-capable system include "IP routers", "IP forwarders" and "IP switches" and similar devices normally used to route Internet Protocol traffic. The requesting system performs an operation 104 for receiving the multicast service information. Transmitting service control information to the requesting system via a multicast service control stream is an example of transmitting the service control information for reception by the requesting system. Receiving a program guide at a user interface application (e.g. an Internet website browser) is an example of receiving the multicast service information. The multicast service information could also be statically configured into the requesting system or it could be configured using other means.

After the subscriber or an application running on the requesting system identifies multicast information to receive, the subscriber or application causes the requesting system to perform an operation 106 for transmitting an IGMP Membership Report message for reception by the multicast-capable system. The IGMP Membership Report message is submitted for requesting membership to a particular multicast group for receiving multicast information that the particular multicast group is receiving. The IGMP Membership Report message designates multicast information (i.e. designated multicast information) that the requesting system is attempting to receive.

The IGMP Membership Report message conveys an intention of the requesting system for being altered from status as a non-member of the particular multicast group to a status as a member of the particular multicast group. Thus, the IGMP Membership Report message is an example of a request for altering a present membership status of the requesting system. It is contemplated herein that the subscriber referred to herein may be the first member of the particular multicast group.

In response to transmission of the IGMP Membership Report message being unsuccessful (e.g. the IGMP Membership Report message is lost during transmission), the requesting system performs an operation 108 for determining whether to re-transmit the IGMP Membership Report message or to terminate the method 100. In one embodiment, the requesting system is programmed to re-transmit the IGMP Membership Report message after a predefined period of time elapses without receiving a corresponding affirmative acknowledge message or negative acknowledge message. After a prescribed number of re-transmit attempts the requesting system would not make any further re-transmit attempts and the method 100 is terminated. Thus, the requesting system would not receive the multicast information associated with the particular multicast group of which the requesting system desires to be a member.

It is contemplated herein that the operation 108 for determining whether to re-transmit the IGMP Membership Report message may be omitted as an operation performed by the requesting system and be manually performed by the subscriber. For example, after transmitting the IGMP Membership Report message and not receiving a corresponding acknowledgment message at the requesting system, the subscriber may assume that the IGMP Membership Report message was lost during transmission and then manually cause the requesting system to re-transmit the IGMP Membership Report message.

In response to transmission of the IGMP Membership Report message being successful, the multicast-capable system performs an operation 110 for receiving the IGMP Membership Report message. After the IGMP Membership Report message is received, the multicast-capable system performs an operation 112 for determining whether membership in the particular multicast group may be implemented. In one embodiment of the operation 112 for determining whether membership in the particular multicast group may be implemented, such determination is a result of analyzing various parameters and conditions to determine whether the capability exists for transmitting designated multicast information to the requesting system. Examples of such parameters and conditions include, but are not limited to, parameters and conditions relating to insufficient network resources for enabling delivery of the particular multicast information stream, insufficient storage capacity of the requesting system, an unidentified or identifiable source of the particular multicast information and the IGMP Membership Report message including a syntactic error.

In response to membership in the particular multicast group not being approved, the multicast-capable system performs an operation 114 for transmitting a negative acknowledge message for reception by the requesting system. Such a negative acknowledge message conveys that membership in the particular multicast group has not been approved (i.e. cannot be implemented). Unicasting the negative acknowledge message for reception by the requesting system is an example of transmitting the negative acknowledge message for reception by the requesting system. After the negative acknowledge message is transmitted, the requesting system performs a corresponding operation 116 for receiving the negative acknowledgment message. In response to the requesting system receiving the negative acknowledge message, the method continues at the operation 108 for determining whether to re-transmit the IGMP Membership Report message or to terminate the method 100, as discussed above.

In response to membership in the particular multicast group being approved, the multicast-capable system performs an operation 118 for transmitting an affirmative acknowledge message for reception by the requesting system. Unicasting the affirmative acknowledge message for reception by the requesting system is an example of transmitting the affirmative acknowledge message for reception by the requesting system. Also in response to membership in the particular multicast group being approved, the multicast-capable system performs an operation 120 for facilitating transmission of the multicast information for reception by the requesting system. After the operation 118 for transmitting the affirmative acknowledge message is performed, the requesting system performs an operation 122 for receiving the affirmative acknowledge message. In response to performing the operation 120 for facilitating transmission of the multicast information is performed, the requesting system performs an operation 124 for receiving the multicast information.

At some point in time after the requesting system begins receiving the designated multicast information, the subscriber decides to discontinue receiving such designated multicast information. To this end, the subscriber must convey this intention to the multicast-capable system.

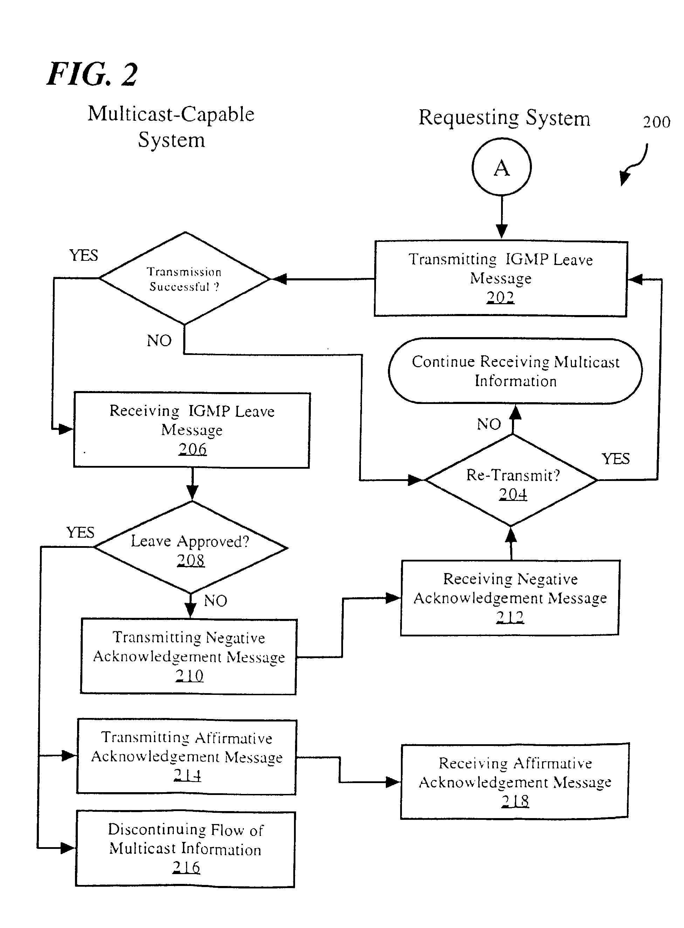

A method 200 for initiating removal of the requesting system from the respective multicast group in accordance with an embodiment of the disclosures made herein is depicted in FIG. 2. The subscriber or an application causes the requesting system to perform an operation 202 for transmitting an IGMP Leave Group message for reception by the multicast-capable system. The IGMP Leave Group message is submitted for requesting removal of the requesting system from the particular multicast group, thus terminating reception of the multicast information that the particular multicast group is receiving. The IGMP Leave Group message conveys an intention of the requesting system for being altered from status as a member of the particular multicast group to a status as a non-member of the particular multicast group. Thus, the IGMP Leave Group message is an example of a request for altering a present membership status of the requesting system.

In response to transmission of the IMGP Leave Group message being unsuccessful (e.g. the IGMP Leave Group message is lost during transmission), the requesting system performs an operation 204 for determining whether to re-transmit the IGMP Leave Group message or to terminate the method 200. In one embodiment, the requesting system is programmed to re-transmit the IGMP Leave Group message after a predefined period of time elapses without receiving a corresponding acknowledge message. After a prescribed number of re-transmit attempts the requesting system would not make any further re-transmit attempts and the method 200 is terminated. Thus, the requesting system would continue receiving the multicast information associated with the particular multicast group of which the requesting system is still a member.

It is contemplated herein that the operation 204 for determining whether to re-transmit the IGMP Leave Group message may be omitted as an operation performed by the requesting system and be manually performed by the subscriber. For example, after transmitting the IGMP Leave Group message and not receiving a corresponding acknowledgment message at the requesting system, the subscriber may assume that the IGMP Leave Group message was lost during transmission and then manually cause the requesting system to re-transmit the IGMP Leave Group message.

In response to transmission of the IGMP Leave Group message being successful, the multicast-capable system performs an operation 206 for receiving the IGMP Leave Group message. After the IGMP Leave Group message is received, the multicast-capable system performs an operation 208 for determining whether removal from the particular multicast group may be implemented. In one embodiment of the operation 208 for determining whether removal from the particular multicast group may be implemented, such determination is a result of analyzing various parameters and conditions to determine whether the capability exists for ceasing transmission of designated multicast information to the requesting system. Examples of such parameters and conditions include, but are not limited to, parameters and conditions relating to determining whether the requesting system is presently a member of the multicast group it is attempting to leave and whether the IGMP Leave Group message includes a syntactic error.

In response to removal from the particular multicast group not being approved, the multicast-capable system performs an operation 210 for transmitting a negative acknowledge message for reception by the requesting system. Unicasting the negative acknowledge message for reception by the requesting system is an example of transmitting the negative acknowledge message for reception by the requesting system. Such a negative acknowledge message conveys that removal from the particular multicast group has not been approved (i.e. cannot be implemented). After the negative acknowledge message is transmitted, the requesting system performs a corresponding operation 212 for receiving the negative acknowledgment message. In response to the requesting system receiving the negative acknowledge message, the method continues at the operation 204 for determining whether to re-transmit the IGMP Leave Group message or to terminate the method 200, as discussed above.

In response to removal from the particular multicast group being approved, the multicast-capable system performs an operation 214 for transmitting an affirmative acknowledge message for reception by the requesting system. Unicasting the affirmative acknowledge message for reception by the requesting system is an example of transmitting the affirmative acknowledge message for reception by the requesting system. Also in response to removal from the particular multicast group being approved, the multicast-capable system performs an operation 216 for discontinuing the flow of multicast information being transmitted for reception by the requesting system. After the operation 214 for transmitting the affirmative acknowledge message is performed, the requesting system performs an operation 218 for receiving the affirmative acknowledge message.

It is contemplated herein that a network must sometimes terminate (i.e. turn off) a particular multicast group autonomously. To this end, the multicast-capable system sends an autonomous acknowledge message in accordance with an embodiment of the disclosures made herein. The autonomous acknowledge message is transmitted for reception by either the particular group itself, or to explicit members within the particular multicast group in the network or multicast-capable system.

Initiating membership requests and leave requests in accordance with embodiments of the disclosures made herein requires definition of a new type of IGMP message. Such a new type of IGMP message is capable of acknowledging an ability or inability to implement requests conveyed by IGMP Membership Report messages and IGMP Leave Group messages. Thus, such acknowledge messages in accordance with embodiments of the disclosures made herein may be affirmative acknowledge messages (i.e. acknowledging an ability to implement a request) or negative acknowledge messages (i.e. acknowledging an inability to implement a request).

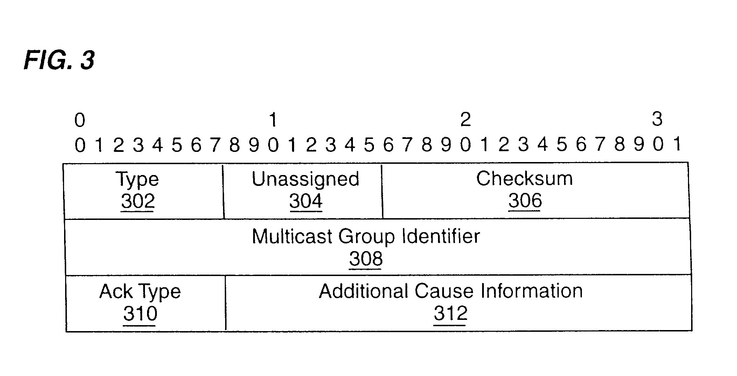

FIG. 3 depicts a universal IGMP Acknowledge message 300 in accordance with an embodiment of the disclosures made herein. The universal IGMP Acknowledge message 300 is depicted in a format similar to the message formats used in RFCs 1112 and 2236. A 'Type' field 302 of the universal IGMP Acknowledge message 300 designates a newly defined value that indicates the IGMP message is an IGMP Acknowledge message. An 'Unassigned' field 304 replaces a maximum Response Time field as defined in other IGMP messages. A 'Checksum' field 306 mimics counterpart fields. A 'Multicast Group Identifier' field 308 designates an identifier corresponding to the multicast group to which the IGMP Acknowledge message applies.

An "Acknowledgement Type" field 310 designates the specific nature of the IGMP Acknowledge message. For example, the acknowledgement type field 310 would take on the value 0x01 to indicate an ability to implement a request for membership in a particular multicast group can be implemented, the value 0x02 to indicate an inability to implement a request for membership in a particular multicast group, the 0x03 to indicate an ability to implement a request for leaving a particular multicast group and the value 0x04 to indicate an inability to implement a request for leaving a particular multicast group. Alternate numeric values could be used in place of the stated values and the intended meaning of the acknowledgements or negative acknowledgement would continue to be conveyed.

An "Additional Cause Information" field 312 conveys additional information relating the acknowledgement, such as the cause associated with a denied request for membership to or removal from a particular multicast group. When the multicast-capable system denies membership to or removal from a particular multicast group, the additional cause information field 312 can convey a cause for such denial to a corresponding subscriber via an associated requesting system. By conveying the cause for such denial, the requesting system can inform the subscriber of the cause for such denial or attempt to correct the situation itself. For example, a set top box would be capable of using the cause information to display an error message on the subscriber's television such as informing the subscriber that the requested stream is not available, that the subscriber is not authorized to receive the requested stream, that the network is busy or that there are insufficient resources on the subscriber's network connection for the requested stream to be delivered. By keeping the subscriber informed, the subscriber may be able to take steps to more quickly resolve the issue. Thus, the subscriber is less likely to contact the service provider to resolve the problem or to become frustrated in the case of a denied request.

It is contemplated herein that a uniform IGMP Affirmative Acknowledge message and a uniform IGMP negative acknowledge message may be implemented in place of a universal IGMP acknowledge message (e.g. the universal IGMP Acknowledge message 300 depicted in FIG. 3). The uniform IGMP Affirmative Acknowledge message mimic the functionality of the universal IGMP Acknowledge message when confirmation of a request to alter a multicast group membership status is designated in an acknowledgement type field of the universal IGMP acknowledge message. Similarly, the uniform IGMP Negative Acknowledge message would mimic functionality of the universal IGMP Acknowledge message when denial of a request for altering a multicast group membership status is designated in the acknowledgement type field of the universal IGMP acknowledge message. In this manner, such uniform IGMP affirmative acknowledge messages and uniform IGMP negative acknowledge messages do not require an acknowledgement type field as is required in the universal IGMP acknowledge message.

A uniform IGMP Affirmative Acknowledge message and a universal IGMP Acknowledge message designating confirmation of a request to alter a multicast group membership status in its acknowledgement type field are each examples of an IGMP affirmative acknowledge message. Similarly, a uniform IGMP Negative Acknowledge message and a universal IGMP Acknowledge message designating denial of a request to alter a multicast group membership status in its acknowledgement type field are each examples of an IGMP negative acknowledge message. Performing an operation for preparing an IGMP Acknowledge message includes populating at least a portion of fields comprising such an IGMP Acknowledge message (e.g. a universal or a uniform IGMP Acknowledge message in accordance with embodiments of the disclosures made herein).

Acknowledge messages in accordance with the disclosures made herein are advantageous in that they provide an explicit acknowledgment of a disposition associated with a requested action (e.g. via an IGMP Membership Report message or an IGMP Leave Group message). However, such acknowledge messages also enable a subscriber to implement actions based on an inferred acknowledgement when an acknowledgment message is not received. For example, if the expected duration of time for sending an IGMP Membership Report message and then receiving a corresponding acknowledgment message is relatively short, the subscriber can more quickly infer the loss of the IGMP Membership Report message compared to the conventional IGMP implementations.

Referring now to data processor programs in accordance with an embodiment of the disclosures made herein, a data processor program controls at least a portion of the operations associated with acknowledging a request for altering a multicast group membership status conveyed via an IGMP Membership Report message. In this manner, the data processor program controls at least a portion of the operations necessary to facilitate acknowledging a request for altering a multicast group membership status in a manner consistent with the disclosures made herein. The term data processor program is defined herein to refer to computer software, data processor algorithms or any other type of instruction code capable of controlling operations associated with a data processor. A microprocessor, microcontroller, microcomputer, digital signal processor, state machine, logic circuitry, and/or any device that manipulates digital information based on operational instruction, or in a predefined manner are examples of a data processor.

A data processor program in accordance with an embodiment of the disclosures made herein is processible by a data processor of a system in accordance with the disclosures made herein (e.g. a requesting system, a network element comprising a multicast-capable system, etc.) In one embodiment, the data processor program is resident on the requesting system and accessible from memory (e.g. RAM, ROM, virtual memory, etc) of the requesting system. In another embodiment, the data processor program is resident on and accessible from a peripheral data storage apparatus such as a diskette, a compact disc, an external data storage device or the like. It is contemplated herein that the data processor program may be initially accessed via the data storage apparatus and thereafter accessed via memory of an associated system.

A data processor program accessible from memory and/or a data storage apparatus and processible by a data processor is defined herein as a data processor program product. It is contemplated herein that the data processor program product may comprise more than one data processor programs each accessible from respective apparatuses. It is further contemplated herein that each one of a plurality of data processor programs may be accessed and processed by different respective ones of a plurality of data processors. For example, a data processor of a multicast-capable system and a data processor of a requesting system access a first data processor program and a second data processor program, respectively, from memory of the multicast-capable system and from memory of the requesting system, respectively.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for facilitating acknowledgement of a request for altering a multicast group membership status, comprising:
receiving an Internet Group Management Protocol (IGMP) Membership Report message designating a request for altering a present membership status with respect to designated multicast information;
determining a membership action associated with the IGMP Membership Report message;
preparing a membership acknowledge message in response to determining the membership action, wherein the membership acknowledgment message designates a resulting membership status associated with the request for altering the present membership status; and
transmitting the membership acknowledge message for reception by a requesting system.

2. The method of claim 1 wherein:
determining the membership action includes confirming an inability to implement the request for altering the present membership status; and
preparing the membership acknowledge message includes preparing an IGMP negative acknowledge message.

3. The method of claim 2 wherein preparing the IGMP negative acknowledge message includes:
specifying an acknowledgement indicator in a message type field of an IGMP message;
specifying a multicast group identifier associated with the particular multicast group in a multicast group identifier field of the IGMP message; and
specifying a negative acknowledgement indicator in an acknowledgment type field of the IGMP message, the negative acknowledgement indicator designates the inability to implement the request for altering the present membership status.

4. The method of claim 3 wherein:
receiving the IGMP Membership Report message includes receiving an IGMP Membership Report message; and
the IGMP Membership Report message requests membership in a particular multicast group for receiving said designated multicast information.

5. The method of claim 4 wherein preparing the negative acknowledgment message includes specifying supplemental membership action information in an additional cause information field of the IGMP message.

6. The method of claim 3 wherein:
receiving the IGMP Membership Report message includes receiving an IGMP Leave Group message; and
the IGMP Leave Group message requests removal from a particular multicast group receiving said designated multicast information.

7. The method of claim 6 wherein preparing the negative acknowledgment message includes specifying supplemental membership action information in an additional cause information field of the IGMP message.

8. The method of claim 1 wherein:
determining the membership action includes confirming an ability to implement the request for altering the present membership status; and
preparing the membership acknowledge message includes preparing an affirmative acknowledge message.

9. The method of claim 8 wherein preparing the affirmative acknowledge message includes:
specifying an acknowledgement indicator in a message type field of an IGMP message;
specifying a multicast group identifier associated with the particular multicast group in a multicast group identifier field of the IGMP message; and
specifying an affirmative acknowledgement indicator in an acknowledgment type field of the IGMP message, the affirmative acknowledgement indicator designates the ability to implement the request for altering the present membership status.

10. The method of claim 9 wherein:
receiving the IGMP Membership Report message includes receiving an IGMP Leave Group message; and
the IGMP Leave Group message requests removal from a particular multicast group receiving said designated multicast information.

11. The method of claim 9 wherein:
receiving the IGMP Membership Report message includes receiving an IGMP Membership Report message; and
the IGMP Membership Report message requests membership in a particular multicast group for receiving said designated multicast information.

12. A method for facilitating acknowledgment of a request for altering a multicast group membership status, comprising:
receiving an Internet Group Management Protocol (IGMP) Membership Report message, wherein the IGMP Membership Report message is transmitted from a requesting system and requests membership in a particular multicast group for receiving designated multicast information; confirming an ability to implement membership of the requesting system in the particular multicast group; preparing a first affirmative acknowledge message after confirming the ability to implement membership of the requesting system in the particular multicast group, wherein preparing the first affirmative acknowledge message includes:
specifying acknowledge message in a type field of a first IGMP message;
specifying an identifier of the particular multicast group in a multicast group identifier field of the first IGMP message; and
specifying an affirmative acknowledgement in an acknowledgment type field of the first IGMP message, the affirmative acknowledgement designating the ability to implement membership of the requesting system in the particular multicast group;
transmitting the first affirmative acknowledge message for reception by the requesting system;
receiving an IGMP Leave Group message from the requesting system after transmitting the first affirmative acknowledge message, wherein the IGMP Leave Group message requests removal of the requesting system from the particular multicast group;
confirming an ability to implement removal of the requesting system from the particular multicast group; and
preparing a second affirmative acknowledge message after confirming the ability to implement removal of the requesting system from the particular multicast group, wherein preparing the second affirmative acknowledge message includes:
specifying acknowledge message in a type field of a first IGMP message;
specifying an identifier of the particular multicast group in a multicast group identifier field of the first IGMP message; and
specifying an affirmative acknowledgement in an acknowledgment type field of the first IGMP message, the affirmative acknowledgement designating the ability to implement removal of the requesting system from the particular multicast group.

13. A data processor program product for facilitating acknowledgment of a request for altering a multicast group membership status, comprising:
a data processor program processable by a data processor;
an apparatus from which the data processor program is accessible by the data processor; and
the data processor program being capable of enabling the data processor to facilitate:
receiving an Internet Group Management Protocol (IGMP) Membership Report message designating a request for altering a present membership status with respect to designated multicast information;
determining a membership action associated with the IGMP Membership Report message;
preparing a membership acknowledge message in response to determining the membership action, wherein the membership acknowledgment message designates a resulting membership status associated with the request for altering the present membership status; and
transmitting the membership acknowledge message for reception by a requesting system.

14. The data processor program product of claim 13 wherein enabling the data processor to facilitate:
determining the membership action includes enabling the data processor to facilitate confirming an inability to implement the request for altering the present membership status; and
preparing the membership acknowledge message includes enabling the data processor to facilitate preparing an IGMP negative acknowledge message.

15. The data processor program product of claim 14 wherein enabling the data processor to facilitate preparing the IGMP negative acknowledge message includes:
enabling the data processor to facilitate specifying an acknowledgement indicator in a message type field of an IGMP message;
enabling the data processor to facilitate specifying a multicast group identifier associated with the particular multicast group in a multicast group identifier field of the IGMP message; and
enabling the data processor to facilitate specifying a negative acknowledgement indicator in an acknowledgment type field of the IGMP message, the negative acknowledgement indicator designates the inability to implement the request for altering the present membership status.

16. The data processor program product of claim 15 wherein:
enabling the data processor to facilitate receiving the IGMP Membership Report message includes enabling the data processor to facilitate receiving an IGMP Membership Report message; and
the IGMP Membership Report message requests membership in a particular multicast group for receiving said designated multicast information.

17. The data processor program product of claim 16 wherein enabling the data processor to facilitate preparing the negative acknowledgment message includes enabling the data processor to facilitate specifying supplemental membership action information in an additional cause information field of the IGMP message.

18. The data processor program product of claim 15 wherein:
enabling the data processor to facilitate receiving the IGMP Membership Report message includes enabling the data processor to facilitate receiving an IGMP Leave Group message; and
the IGMP Leave Group message requests removal from a particular multicast group receiving said designated multicast information.

19. The data processor program product of claim 18 wherein enabling the data processor to facilitate preparing the negative acknowledgment message includes enabling the data processor to facilitate specifying supplemental membership action information in an additional cause information field of the IGMP message.

20. The data processor program product of claim 13 wherein enabling the data processor to facilitate:
determining the membership action includes enabling the data processor to facilitate confirming an ability to implement the request for altering the present membership status; and
preparing the membership acknowledge message includes enabling the data processor to facilitate preparing an affirmative acknowledge message.

21. The data processor program product of claim 20 wherein enabling the data processor to facilitate preparing the affirmative acknowledge message includes:
enabling the data processor to facilitate specifying an acknowledgement indicator in a message type field of an IGMP message;
enabling the data processor to facilitate specifying a multicast group identifier associated with the particular multicast group in a multicast group identifier field of the IGMP message; and
enabling the data processor to facilitate specifying an affirmative acknowledgement indicator in an acknowledgment type field of the IGMP message, the affirmative acknowledgement indicator designates the ability to implement the request for altering the present membership status.

22. The data processor program product of claim 21 wherein:
enabling the data processor to facilitate receiving the IGMP Membership Report message includes enabling the data processor to facilitate receiving an IGMP Leave Group message; and
the IGMP Leave Group message requests removal from a particular multicast group receiving said designated multicast information.

23. The data processor program product of claim 21 wherein:
enabling the data processor to facilitate receiving the IGMP Membership Report message includes enabling the data processor to facilitate receiving an IGMP Membership Report message; and
the IGMP Membership Report message requests membership in a particular multicast group for receiving said designated multicast information.

24. A system for facilitating acknowledgment of a request for altering a multicast group membership status, comprising:
a multicast-capable system including a data processor; and
a data processor program accessible by the data processor of the multicast-capable system;
the data processor program being capable of enabling the data processor of the multicast-capable system to facilitate:
receiving an Internet Group Management Protocol (IGMP) Membership Report message designating a request for altering a present membership status with respect to designated multicast information;
determining a membership action associated with the IGMP Membership Report message;
preparing a membership acknowledge message in response to determining the membership action, wherein the membership acknowledgment message designates a resulting membership status associated with the request for altering the present membership status; and
transmitting the membership acknowledge message for reception by a requesting system.

25. The system of claim 24 wherein enabling the data processor to facilitate:
determining the membership action includes enabling the data processor to facilitate confirming an inability to implement the request for altering the present membership status; and
preparing the membership acknowledge message includes enabling the data processor to facilitate preparing an IGMP negative acknowledge message.

26. The system of claim 25 wherein enabling the data processor to facilitate preparing the IGMP negative acknowledge message includes:
enabling the data processor to facilitate specifying an acknowledgement indicator in a message type field of an IGMP message;
enabling the data processor to facilitate specifying a multicast group identifier associated with the particular multicast group in a multicast group identifier field of the IGMP message; and
enabling the data processor to facilitate specifying a negative acknowledgement indicator in an acknowledgment type field of the IGMP message, the negative acknowledgement indicator designates the inability to implement the request for altering the present membership status.

27. The system of claim 26 wherein:
enabling the data processor to facilitate receiving the IGMP Membership Report message includes enabling the data processor to facilitate receiving an IGMP Membership Report message; and
the IGMP Membership Report message requests membership in a particular multicast group for receiving said designated multicast information.

28. The system of claim 27 wherein enabling the data processor to facilitate preparing the negative acknowledgment message includes enabling the data processor to facilitate specifying supplemental membership action information in an additional cause information field of the IGMP message.

29. The system of claim 26 wherein:
enabling the data processor to facilitate receiving the IGMP Membership Report message includes enabling the data processor to facilitate receiving an IGMP Leave Group message; and
the IGMP Leave Group message requests removal from a particular multicast group receiving said designated multicast information.

30. The system of claim 29 wherein enabling the data processor to facilitate preparing the negative acknowledgment message includes enabling the data processor to facilitate specifying supplemental membership action information in an additional cause information field of the IGMP message.

31. The system of claim 24 wherein enabling the data processor to facilitate:
determining the membership action includes enabling the data processor to facilitate confirming an ability to implement the request for altering the present membership status; and
preparing the membership acknowledge message includes enabling the data processor to facilitate preparing an affirmative acknowledge message.

32. The system of claim 31 wherein enabling the data processor to facilitate preparing the affirmative acknowledge message includes:
enabling the data processor to facilitate specifying an acknowledgement indicator in a message type field of an IGMP message;
enabling the data processor to facilitate specifying a multicast group identifier associated with the particular multicast group in a multicast group identifier field of the IGMP message; and
enabling the data processor to facilitate specifying an affirmative acknowledgement indicator in an acknowledgment type field of the IGMP message, the affirmative acknowledgement indicator designates the ability to implement the request for altering the present membership status.

33. The system of claim 32 wherein:
enabling the data processor to facilitate receiving the IGMP Membership Report message includes enabling the data processor to facilitate receiving an IGMP Leave Group message; and
the IGMP Leave Group message requests removal from a particular multicast group receiving said designated multicast information.

34. The system of claim 32 wherein:
enabling the data processor to facilitate receiving the IGMP Membership Report message includes enabling the data processor to facilitate receiving an IGMP Membership Report message; and
the IGMP Membership Report message requests membership in a particular multicast group for receiving said designated multicast information.
